# EUROPÄISCHE PATENTSCHRIFT

(11) **EP 2 825 294 B1**
(45) Veröffentlichungstag und Bekanntmachung des Hinweises auf die Patenterteilung: **27.07.2016**
(21) Anmeldenummer: 13703526.7
(22) Anmeldetag: 29.01.2013
(51) Int. Cl.: B01J 21/04, B01J 21/06, B01J 23/40, B01J 29/072, F01N 3/10, F01N 3/20, B01D 53/94, B01J 35/00, B01J 35/04, B01J 37/02, F01N 3/035, F01N 13/00

(54) **KATALYSATORBAUTEIL EINER KRAFTFAHRZEUG-ABGASREINIGUNGSANLAGE UND VERWENDUNG EINES KATALYSATORBAUTEILS**
CATALYST COMPONENT OF A MOTOR VEHICLE EXHAUST GAS CLEANING SYSTEM AND USE OF A CATALYST COMPONENT
ÉLÉMENT CATALYTIQUE D'UN SYSTÈME DE PURIFICATION DES GAZ D'ÉCHAPPEMENT D'UN VÉHICULE MOTORISÉ ET UTILISATION D'UN ÉLÉMENT CATALYTIQUE

(30) Priorität: 17.03.2012 DE 102012005508
(43) Veröffentlichungstag der Anmeldung: 21.01.2015
(73) Patentinhaber: Daimler AG, 70327 Stuttgart (DE)
(72) Erfinder: MASSNER, Alexander, 73730 Esslingen (DE); SINGH, Inderpal, Livonia, MI 48154 (US); ZIMMERMANN, Frank, 70372 Stuttgart (DE)
(74) Vertreter: JENSEN & SON
(86) Internationale Anmeldenummer: PCT/EP2013/000256
(87) Internationale Veröffentlichungsnummer: WO 2013/139414

(56) Entgegenhaltungen:
- WO-A1-01/74476
- WO-A1-2007/077462

## Beschreibung

Die Erfindung betrifft ein Katalysatorbauteil einer Kraftfahrzeug-Abgasreinigungsanlage mit den Merkmalen des Oberbegriffs des Anspruchs 1 und die Verwendung eines solchen Katalysatorbauteils in einer Abgasreinigungsanlage eines Kraftfahrzeugs zur Aufheizung von Abgas.

Aus der WO 01/74476 A1 ist ein als Stickoxidfalle ausgebildetes Katalysatorbauteil bekannt, welches drei in Abgasströmungsrichtung hintereinander angeordnete Beschichtungszonen mit einem abnehmenden Gehalt an Metallen der Platingruppe aufweisen kann. Dadurch wird eine hohe Stickoxid-Umsatzfähigkeit in einem breiten Temperaturbereich erzielt.

Aufgabe der Erfindung ist es, ein kostengünstiges Katalysatorbauteil für eine Kraftfahrzeug-Abgasreinigungsanlage mit insgesamt niedrigem Edelmetallgehalt und dennoch hoher oxidationskatalytischer Wirkung insbesondere bei vergleichsweise niedrigen Temperaturen anzugeben. Weiter ist es Aufgabe der Erfindung, eine wirksame Möglichkeit zur Aufheizung von Abgas eines Kraftfahrzeugs, insbesondere ausgehend von niedrigen Temperaturen, anzugeben.

Diese Aufgaben werden durch ein Katalysatorbauteil mit den Merkmalen des Anspruchs 1 sowie eine Verwendung eines solchen Katalysatorbauteils gemäß den Merkmalen des Anspruchs 6 gelöst.

Das erfindungsgemäße Katalysatorbauteil umfasst einen Trägerkörper in Wabenkörperbauweise, mit sich in einer Längsrichtung erstreckenden, von Gas von einem einlassseitigen Ende des Katalysatorbauteils bis zu einem auslassseitigen Ende des Katalysatorbauteils frei durchströmbaren Kanälen. Auf den Kanalwänden ist durchgehend eine katalytisch wirksame Beschichtung mit einem durch wenigstens ein Element der Platingruppe bestimmten Edelmetallgehalt aufgebracht. Dabei ist eine erste Beschichtungszone vorgesehen, die sich in Längsrichtung im Wesentlichen vom einlassseitigen Ende bis zu einer im Bereich zwischen dem einlassseitigen Ende und dem auslassseitigen Ende angeordneten ersten Beschichtungsgrenze erstreckt. Ferner ist eine zweite Beschichtungszone vorgesehen, die sich in Längsrichtung im Wesentlichen von der ersten Beschichtungsgrenze bis zu einer im Bereich zwischen dem einlassseitigen Ende und dem auslassseitigen Ende und hinter der ersten Beschichtungsgrenze angeordneten zweiten Beschichtungsgrenze erstreckt. Weiter ist eine dritte Beschichtungszone vorgesehen, die sich in Längsrichtung im Wesentlichen von der zweiten Beschichtungsgrenze bis zum auslassseitigen Ende erstreckt. Die Beschichtung der dritten Beschichtungszone weist einen niedrigeren Gehalt an Edelmetallen der Platingruppe auf als die Beschichtung der zweiten Beschichtungszone, welche wiederum einen niedrigeren Gehalt an Edelmetallen der Platingruppe aufweist als die Beschichtung der ersten Beschichtungszone. Charakteristischerweise ist die Beschichtung des Katalysatorbauteils durchgehend als oxidationskatalytisch wirksame Beschichtung ausgebildet und frei von Rhodium. Vorzugsweise weist die erste Beschichtung einen wenigstens doppelt so hohen Edelmetallgehalt auf wie die Beschichtung der zweiten Beschichtungszone und diese wiederum einen wenigstens doppelt so hohen Edelmetallgehalt wie die für die dritte Beschichtungszone vorgesehene dritte Beschichtung. Besonders bevorzugt wird der Edelmetallgehalt in einer der ersten und zweiten Beschichtungszone mehr als 2,5 mal so hoch gewählt wie in der unmittelbar nachfolgenden Beschichtungszone. Ein diesbezüglicher Faktor von 3,5 ist ebenfalls als vorteilhaft anzusehen.

Infolge der erfindungsgemäßen Zonierung mit Zonen mit abnehmenden Edelmetallgehalt kann ein vergleichsweise geringer Gesamt-Edelmetallgehalt erzielt werden, wobei aufgrund des eintrittseitig im höchsten Umfang vorhandenen Edelmetallgehalts ein sehr gutes Anspringverhalten, d.h. eine niedrige Anspringtemperatur, insbesondere in Bezug auf eine Oxidation von Kohlenwasserstoffen erzielt wird. Die erfindungsgemäße Zonierung hat gegenüber Ausführungsformen, bei welchen eine niedrige Anspringtemperatur durch einen durchgehend hohen Gehalt an Edelmetallen erzielt wird, außerdem den Vorteil einer verminderten Neigung zur Oxidation von Stickstoffmonoxid und Schwefeldioxid. Infolge der erfindungsgemäßen Ausführung als an Rhodium freies Katalysatorbauteil ist dieses besonders kostengünstig herstellbar. Die Beschichtung ist somit auch als oxidationskatalytisch wirksame Beschichtung ausgebildet, welche die bekannte, hauptsächlich durch Rhodium bewirkte 3-Wege-Katalysatorwirkung vorzugsweise kaum oder zumindest in stark vermindertem Ausmaß aufweist. Bevorzugt fehlen auch Beschichtungsbestandteile mit Speicherwirkung gegenüber Stickoxiden und/oder Sauerstoff oder sind nur in geringem Umfang als untergeordneter Bestandteil vorhanden. D.h. es sind allenfalls geringe Anteile an Metallverbindungen, insbesondere Oxiden, Hydroxiden oder Carbonaten der Alkali- und Erdalkaligruppe vorhanden. Die vorhandenen Edelmetalle der Platingruppe, vorzugsweise hauptsächlich oder ausschließlich durch Platin und/oder Palladium repräsentiert, sind fein dispergiert auf oder in einem so genannten wash-coat enthalten, der vorzugsweise überwiegend aus den Bestandteilen Aluminiumoxid und/oder Zirkonoxid gebildet ist. Bevorzugt ist ein an Ceroxid freier oder Ceroxid allenfalls in geringem Umfang aufweisender wash-coat vorgesehen. Die Beschichtung ist, abgesehen von der Außenoberfläche des Wabenkörpers auf allen Kanalwänden vorhanden. Die Kanalwände sind bevorzugt gasundurchlässig oder mit einer allenfalls geringen Gasdurchlässigkeit ausgebildet. Jedenfalls ist eine Filterwirkung vorzugsweise allenfalls in einem vernachlässigbaren Umfang gegeben.

Unter einer sich im Wesentlichen vom einlassseitigen Ende bis zur ersten Beschichtungsgrenze erstreckenden Beschichtung ist dabei zu verstehen, dass die erste Beschichtungszone, abgesehen von gegebenenfalls fertigungstechnisch bedingten Toleranzen, unmittelbar am einlassseitigen Ende beginnt und an der ersten Beschichtungsgrenze endet. Entsprechend erstreckt sich die zweite Beschichtungszone, abgesehen von fertigungstechnischen geringen Toleranzen zwischen der ersten und der zweiten Beschichtungsgrenze. Die dritte Beschichtungszone beginnt, abgesehen von geringen fertigungstechnischen Toleranzen an der zweiten Beschichtungsgrenze und erstreckt sich bis unmittelbar zum Auslassende. Somit sind keine oder zumindest keinen nennenswerten Bereiche ohne Beschichtung vorhanden und es existieren keine oder allenfalls vernachlässigbare Überlappungen von Beschichtungen der einzelnen Beschichtungszonen. Es kann daher von einer im Wesentlichen überlappungsfreien, durchgehenden Beschichtung des Katalysatorbauteils gesprochen werden.

Der Trägerkörper ist vorzugsweise als extrudierter einstückiger Keramik-Träger ausgebildet. Es kann jedoch auch ein aus gewellten Metallfolien gebildeter Metallträgerkörper vorgesehen sein. Insbesondere im Fall eines Keramik-Trägerkörpers weisen die Kanäle einen rechteckigen und über die Längsrichtung gesehen wenigstens annähernd konstanten Querschnitt auf. Es können jedoch auch sechseckige oder achteckige Querschnittsformen vorgesehen sein. Die üblicherweise in cpsi (cells per square inch) angegebene Zellendichte liegt vorzugsweise im Bereich zwischen 100 und 600. Besonders bevorzugt sind Zelldichten zwischen 200 cpsi und 400 cpsi.

In Ausgestaltung der Erfindung betragen die Längserstreckungen der ersten und der zweiten Beschichtungszone jeweils 10 % bis 40 % der Gesamtlängserstreckung des Katalysatorbauteils. Bevorzugt betragen die Längserstreckungen der ersten und der zweiten Beschichtungszone jeweils etwa 25 % der Gesamtlängserstreckung des Katalysatorbauteils. Dadurch kann der Gesamt-Edelmetallgehalt gering gehalten werden, da die dritte Beschichtungszone mit dem niedrigsten Edelmetallgehalt bevorzugt wenigstens 50 % der Gesamtlänge ausmacht.

In weiterer Ausgestaltung der Erfindung ist der Edelmetallgehalt der Beschichtung durch die Elemente Platin und Palladium bestimmt, wobei der Edelmetallgehalt 0.07 bis 3.53 g/l (12 g/ft³ bis 100 g/ft³) bezogen auf das Gesamtvolumen des Katalysatorbauteils beträgt. Vorzugsweise beträgt der mittlere Edelmetallgehalt 0.53 bis 1.77 g/l (15 g/ft³ bis 50 g/ft³). Besonders bevorzugt ist ein mittlerer Edelmetallgehalt im Bereich von 0.88 g/l bis 1.41 g/l (25 g/ft³ bis 40 g/ft³), wodurch das Katalysatorbauteil besonders kostengünstig ist.

In weiterer Ausgestaltung der Erfindung sind die Edelmetalle Platin und Palladium in einem Massenverhältnis von 1:5 bis 5:1 in der Beschichtung vorgesehen. Bevorzugt ist ein Massenverhältnis von 1:2 bis 2:1. Besonders bevorzugt ist ein Massenverhältnis im Bereich von 1:1,5 bis 1,5:1. Dies bewirkt eine insbesondere in Bezug auf Kohlenwasserstoffe hohe oxidationskatalystische Wirkung,

In weiterer Ausgestaltung der Erfindung beträgt der Edelmetallgehalt in der sten Beschichtungszone 2.12 g/l bis 5.3 g/l (60 g/ft³ bis 150 g/ft³), in der zweiten Beschichtungszone 0.71 g/l bis 5.3 g/l (20 g/ft³ bis 60 g/ft³) und in der dritten Beschichtungszone 0.18 g/l bis 0.53 g/l (5 g/ft³bis 15 g/ft³). Besonders bevorzugt ist eine Ausführungsform mit einem Edelmetallgehalt von etwa 2.82 g/l (80 g/ft³) in der ersten Beschichtungszone, etwa 1.06 g/l (30 g/ft³) in der zweiten Beschichtungszone und/oder etwa 0.35 g/l (10g/ft³)der driften Beschichtungszone. Infolge des lediglich eingangsseitig vorhandenen vergleichsweise hohen Edelmetallgehalts kann eine hohe Kostenersparnis erzielt werden. Der Edelmetallgehalt ist in einer jeweiligen Beschichtungszone in Bezug auf deren Längserstreckung bevorzugt gleichmäßig verteilt, d.h. es liegt in einer jeweiligen Beschichtungszone vorzugsweise kein oder allenfalls ein geringer Gradient vor.

Die erfindungsgemäße Verwendung des Katalysatorbauteils in einer Abgasreinigungsanlage eines Kraftfahrzeugs sieht eine Aufheizung von Abgas durch Oxidation von Kohlenwasserstoffen stromauf einer in der Abgasreinigungsanlage angeordneten seriellen Anordnung eines Partikelfilters und eines dem Partikelfilter nachgeschalteten SCR-Katalysators vor. Wie durch Versuche bestätigt werden konnte, ist eine zuverlässige Aufheizung insbesondere ausgehend von niedrigen Abgastemperaturen über eine sehr lange Gebrauchszeit ermöglicht. Dies macht das Katalysatorbauteil insbesondere zur Verwendung in entsprechenden Abgasreinigungsanlagen von Nutzfahrzeugen geeignet, da Nutzfahrzeuge typischerweise über lange Laufstrecken im Einsatz sind. Dabei besteht das Erfordernis, über möglichst lange Gebrausdauem mit typischerweise mehreren Hunderttausend Kilometern Fahrleistung zuverlässig Partikelfilterregenerationen durch thermischen Rußabbrand durchführen zu können. Dabei ist typischerweise eine erzwungene Abgasaufheizung auf eine für einen Rußabbrand erforderliche Temperatur durchzuführen, wozu das Katalysatorbauteil dient.

Weiterhin ist es wünschenswert über eine möglichst lange Gebrauchsdauer stabile Verhältnisse in Bezug auf eine die Wirkung des SCR-Katalysators beeinflussende Stickstoffdioxidbildung am Katalysatorbauteil infolge von Oxidation von im Abgas enthaltenem Stickstoffmonoxid zu erzielen. Dies ist durch das erfindungsgemäße Katalysatorbauteil ebenfalls ermöglicht. Dabei kann bewusst aufgrund der hervorragenden Langzeitstabilität des Katalysatorbauteils auf eine anfänglich hohe diesbezügliche Oxidationskraft verzichtet werden, welche oftmals für Oxidationskatalysatoren durch hohe Platingehalte vorgesehen wird, um ein alterungsbedingtes Nachlassen der Stickoxidoxidationswirkung zu kompensieren.

In einer besonders bevorzugten Ausgestaltung der Erfindung erfolgt eine Verwendung des Katalysatorbauteils zur Oxidation von zumindest überwiegend als Dieselkraftstoff vorliegenden Kohlenwasserstoffen. Der Dieselkraftstoff wird in diesem Fall stromaufwärts des Katalysatorbauteils durch Verdampfung und/oder Versprühen dem Abgas zugesetzt und durch das Katalysatorbauteil in einer exothermen Reaktion oxidiert und dadurch das Abgas aufgeheizt.

Eine weitere Ausgestaltung der Erfindung sieht eine Verwendung des Katalysatorbauteils in einer Abgasreinigungsanlage vor, welche stromab des Partikelfilters einen zweiteiligen SCR-Katalysator in der Abgasreinigungsanlage aufweist, wobei der SCR-Katalysator in Abgasströmungsrichtung gesehen einen ersten Teil, mit einem Eisen enthaltenden Zeolithen und einen stromab davon angeordneten zweiten Teil mit einem Kupfer enthaltenden Zeolithen aufweist. Wie durch Versuche bestätigt werden konnte, ist infolge eines begrenzten NO₂-Bildungsvermögen des Katalysatorbauteils in Verbindung mit dem zweiteiligen SCR-Katalysator ein hoher Stickoxidumsatz bei gleichzeitig geringem Schlupf von Stickstoffdioxid (NO₂) ermöglicht. Die beiden Katalysatorteile sind bevorzugt durch separate Wabenkörper gebildet. Die entsprechenden Zeolith-Beschichtungen können jedoch auch aneinandergrenzend auf ein und demselben Wabenkörper vorgesehen sein.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Es zeigen
- Fig. 1: eine schematische Darstellung eines erfindungsgemäßen Katalysatorbauteils,
- Fig. 2: ein schematisches Diagramm zur Verdeutlichung der Edelmetallbeschichtung des erfindungsgemäßen Katalysatorbauteils und
- Fig. 3: eine schematische Darstellung einer bevorzugten Ausführung einer Kraftfahrzeug-Abgasreinigungsanlage, in welcher das erfindungsgemäße Katalysatorbauteil verwendet wird.

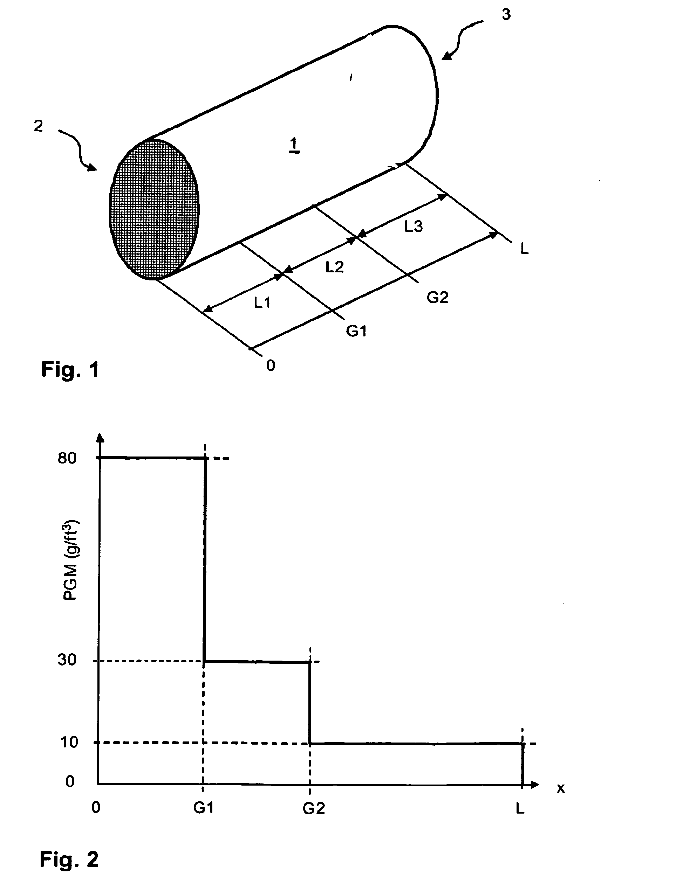

In Fig. 1 ist schematisch ein erfindungsgemäßes Katalysatorbauteil 1 dargestellt, wie es zur Verwendung in einer Abgasreinigungsanlage eines nicht dargestellten Kraftfahrzeug-Verbrennungsmotors vorgesehen ist. Das Katalysatorbauteil 1 ist vorliegend als Wabenkörper mit einem bezüglich eines Abgaseintritts einlassseitigen Ende 2 und einem auslassseitigen Ende 3 ausgebildet und weist eine in Abgasströmungsrichtung gesehene Längserstreckung der Länge L auf. Vorliegend ist der Querschnitt des Wabenkörpers oval, es kann jedoch auch ein runder Querschnitt vorgesehen sein. Der Wabenkörper weist durchgehend offene Kanäle auf, auf deren Wänden eine oxidationskatalytisch wirksame Beschichtung vorgesehen ist. Die Beschichtung enthält in Bezug auf Edelmetalle der Platingruppe bevorzugt lediglich Platin und Palladium, jedenfalls ist sie frei von Rhodium. Vorzugsweise sind außer Platin und Palladium keine weiteren Edelmetalle vorgesehen.

Das erfindungsgemäße Katalysatorbauteil 1 weist insgesamt in Richtung der Längserstreckung gesehen hintereinander drei Beschichtungszonen mit unterschiedlichen Gehalten der Edelmetalle Platin und Palladium auf. Die erste Beschichtungszone weist eine Länge L1 auf und erstreckt sich vom einlassseitigen Ende 2 bis zu einer ersten Beschichtungsgrenze G1. Die zweite Beschichtungszone erstreckt sich in Längsrichtung von der Beschichtungsgrenze G1 bis zur Beschichtungsgrenze G2 und weist eine Länge L2 auf. Unmittelbar an die zweite Beschichtungszone schließt sich eine dritte Beschichtungszone an, welche die Länge L3 aufweist und sich bis zum austrittsseitigen Ende 3 des Katalysatorbauteils 1 erstreckt. In einer besonders bevorzugten Ausführungsform machen die Längen L1 und L2 der ersten und zweiten Beschichtungszone jeweils etwa 25 % der Gesamtlänge L aus. Für die erste und zweite Beschichtungszone L1 und L2 können jedoch auch Längenbereiche von jeweils 10 % bis 40 % der Gesamtlänge L vorgesehen sein. Der Gehalt an Platin und Palladium liegt im Bereich von etwa 0.071 g/l bis 3.53 g/l (12 g/ft³ bis etwa 100 g/ft³) bezogen auf das Gesamtvolumen des Katalysatorbauteils 1 und verteilt sich unterschiedlich auf die drei Beschichtungszonen, was nachfolgend anhand von Fig. 2 näher verdeutlicht wird.

In Fig. 2 ist ein Edelmetallgehalt PGM (platinum group metal) der Beschichtung des Katalysatorbauteils 1, angegeben in der üblicherweise verwendeten Angabe g/ft³, in Abhängigkeit von der sich in axialer Richtung erstreckenden Ortskoordinate x des Katalysatorbauteils 1 in Diagrammform schematisch wiedergegeben. Innerhalb einer jeweiligen Beschichtungszone sind die Edelmetallgehalte PGM der Beschichtung über die jeweilige Länge L1, L2, L3 wenigstens annähernd konstant 2.12 g/l bis 5.3 g/l ( 1 g/ft³ g/ft³= 0.0353 g/l).

In der vorliegenden dargestellten besonders bevorzugten Verteilung weist die für die erste Beschichtungszone vorgesehene erste Beschichtung einen PGM-Wert des Edelmetallgehalts von etwa 2.82 g/l 80 g/ft³ auf. Es kann jedoch ein Edelmetallgehalt PGM im Bereich von etwa 2.12 g/l bis 5.3 g/l (60 g/ft³ bis 150 g/ft³) vorgesehen sein. Der Edelmetallgehalt PGM der dritten Beschichtun in der dritten Beschichtungszone weist vorliegend einen PGM-Wert von etwa 0.353 g/l (10 g/ft³) auf. Es kann jedoch ein Edelmetallgehalt PGM im Bereich von etwa 0.177 g/l (5 g/ft³) bis 0.53 g/l (15 g/ft³) vorgesehen sein. Die stromauf an die erste Beschichtungszone und stromab an die dritte Beschichtungszone angrenzende, mittlere zweite Beschitchtungszone weist vorliegend eine zweite Beschichtung mit einem PGM-Wert von etwa 1.06 g/l (30 g/ft³) auf. Es kann jedoch ein Edelmetallgehalt PGM im Bereich von etwa 0.71 g/l bis 2.12 g/l (20 g/ft³ bis 60 g/ft³) vorgesehen sein. Ein Massenverhältnis von Platin und Palladium ist in den Beschichtungen der jeweiligen Beschichtungszonen bevorzugt ebenfalls konstant und liegt im Bereich zwischen 1:5 bis 5:1, insbesondere im Bereich zwischen 1:2 und 2:1 und besonders bevorzugt zwischen 1: 1,5 und 1,5:1. Bevorzugt wird ein über die Gesamtlänge L wenigstens annähernd konstantes Verhältnis von Platin und Palladium gewählt.

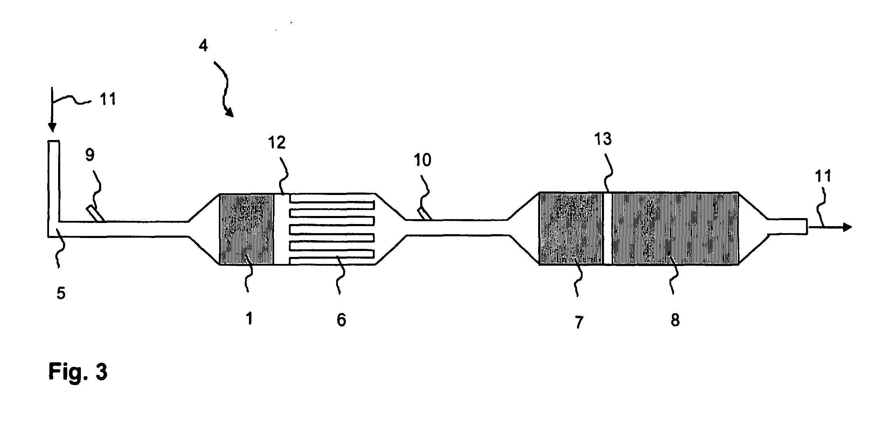

Nachfolgend wird unter Bezug auf Fig. 3 auf eine bevorzugte Verwendung des erfindungsgemäßen Katalysatorbauteils 1 eingegangen.

In Fig. 3 ist eine bevorzugte Ausführungsform einer Kraftfahrzeug-Abgasreinigungsanlage 4 schematisch dargestellt. Die Abgasreinigungsanlage 4 dient vorzugsweise der Reinigung des Abgases eines nicht dargestellten Nutzfahrzeug-Dieselmotors. Die Abgasreinigungsanlage 4 weist vorliegend eine Abgasleitung 5 auf, in welcher in einer durch den Pfeil 11 gekennzeichneten Abgasströmungsrichtung hintereinander das weiter oben beschriebene, bevorzugt als Dieseloxidationskatalysator ausgebildete Katalysatorbauteil 1, ein Dieselpartikelfilter 6, ein erster SCR-Katalysator 7 und ein zweiter SCR-Katalysator 8 angeordnet sind. Vorliegend sind das Katalysatorbauteil 1 und der Dieselpartikelfilter 6 in kurzem Abstand zueinander in einem ersten gemeinsamen Gehäuse 12 angeordnet. Der erste SCR-Katalysator 7 und der zweite SCR-Katalysator 8 sind mit kurzem Abstand ebenfalls in einem gemeinsamen zweiten Gehäuse 13 angeordnet. Eine Anordnung der genannten Bauteile in einer gemeinsamen kombinierten Abgasreinigungs-Schalldämpferbox ist ebenfalls möglich.

Stromauf des Katalysatorbauteils 1 ist eine erste Reduktionsmittel-Zugabeeinheit 9 vorgesehen, über welche dem Abgas ein kohlenwasserstoffhaltiger Brennstoff, insbesondere Dieselkraftstoff, fein verteilt zugegeben werden kann. Zwischen dem Dieselpartikelfilter 6 und dem ersten SCR-Katalysator 7 ist eine zweite Reduktionsmittel-Zugabeeinheit 10 vorgesehen, über welche dem Abgas ein Ammoniak in freier oder gebundener Form aufweisendes Reduktionsmittel, insbesondere eine wässrige Harnstofflösung fein verteilt zugegeben werden kann. Weitere Bauteile, wie beispielsweise Abgassensoren für Sauer-stoff, Stickoxid und/oder Ammoniak sind vorzugsweise ebenfalls vorgesehen, was der Übersichtlichkeit halber jedoch nicht näher dargestellt ist.

Der Partikelfilter 6 dient der Ausfilterung von insbesondere in Form von Ruß vorliegenden Partikeln aus dem Abgas und kann in Sintermetallausführung oder als wanddurchströmte Filtereinheit in Wabenkörperbauweise ausgebildet sein. Vorzugsweise ist für den Partikelfilter 6 eine katalytische Beschichtung, bevorzugt mit einem einen thermischen Rußabbrand fördernden Beschichtungsmaterial vorgesehen.

Der erste SCR-Katalysator 7 weist auf einem bevorzugt keramischen Wabenkörper eine erste SCR-Beschichtung auf, welche vorliegend einen Eisen enthaltenden Zeolithen enthält. Diese ermöglicht eine selektive katalytische Stickoxidreduktion bei Sauerstoffüberschuss. Als Reduktionsmittel dient dabei Ammoniak, welcher durch die zweite Zugabeeinheit 10 dem Abgas zugeführt wurde. Die erste SCR-Beschichtung ist bevorzugt so ausgelegt, dass eine gute Hochtemperaturaktivität, d.h. ein besonders hoher Stickoxidumsatz bei vergleichsweise hohen Temperaturen ermöglicht ist. Ferner ermöglicht die Eisen enthaltende erste Zeolithbeschichtung generell eine hohe katalytische Aktivität auch bei vergleichsweise hohen Stickstoffdioxidanteilen von über 50 % des einströmenden Stickoxids.

Der zweite SCR-Katalysator 8 weist auf einem bevorzugt keramischen Wabenkörper eine zweite SCR-Beschichtung auf, welche vorliegend einen Kupfer enthaltenden Zeolithen enthält. Diese ermöglicht ebenfalls eine selektive katalytische Stickoxidreduktion mittels Ammoniak bei Sauerstoffüberschuss. Die zweite SCR-Beschichtung ist bevorzugt so ausgelegt, dass eine besonders gute Tieftemperaturaktivität ermöglicht ist. Ferner ermöglicht die Kupfer enthaltende zweite Zeolithbeschichtung generell eine hohe katalytische Aktivität auch bei vergleichsweise niedrigen Stickstoffdioxidanteilen von weit weniger als 50 % des einströmenden Stickoxids. Dies erweist sich als besonders vorteilhaft, da aufgrund der des vom ersten SCR-Katalysators 7 bewirkten NOx-Umsatz der stromab angeordnete zweite SCR-Katalysators 8 Abgas mit einem verminderten Stickstoffdioxidanteil erhält. Infolge des verminderten Stickstoffdioxidanteils im Abgas ist auch eine besonders hohe Selektivität des zweiten SCR-Katalysators in Bezug auf eine Reduktion von Stickoxid zu elementarem Stickstoff, d.h. eine besonders niedrige Bildung von unerwünschtem Lachgas gegeben.

Weiterhin ist infolge der Ausführungsform des SCR-Katalysators mit einem stromaufwärtigen ersten Teil mit Hochtemperaturaktivität und einem stromabwärtigen Teil mit Niedertemperaturaktivität eine hohe katalytische Wirksamkeit des kombinierten SCR-Katalysators über einen weiten Temperaturbereich und damit eine Einhaltung schärfster Abgasgrenzwerte ermöglicht.

Vorliegend ist im ausströmseitigen Bereich des zweiten SCR-Katalysators 8 eine Beschichtungszone mit einer oxidationskatalytischen Beschichtung vorgesehen, welche hauptsächlich der Oxidation von Ammoniak im Falle eines auftretenden Ammoniak-Schlupfs dient. Diese Beschichtungszone ist auf einem austrittseitigen Anteil des Trägerkörpers aufgebracht, der etwa 10 % bis 20 % der Gesamtlänge des zweiten SCR-Katalysators 8 ausmacht. Vorliegend weist der zweite SCR-Katalysator 8 ein Volumen auf, welches mindestens dem des ersten SCR-Katalysators 7 entspricht. Vorzugsweise ist der zweite SCR-Katalysator 8 etwa zwei- bis dreimal so groß wie der erste SCR-Katalysator 7. Obschon die Ausführungsform mit einem Eisen enthaltenden Zeolithen als erste SCR-Beschichtung für den ersten SCR-Katalysator 7 und mit einem Kupfer enthaltenden Zeolithen als zweite SCR-Beschichtung für den zweiten SCR-Katalysator 8 als bevorzugt anzusehen ist, kann es für einige Anwendungen auch vorgesehen sein, einen Kupfer enthaltenden Zeolithen stromaufwärts von einem Eisen enthaltenden Zeolithen anzuordnen.

Für den Partikelfilter 6 sind wiederkehrende Regenerationsvorgänge vorgesehen, bei welchen angesammelter Ruß durch thermisch induzierten Rußabbrand mittels Sauerstoff entfernt wird. Hierfür ist eine Aufheizung des Partikelfilters 6 auf eine für den Rußabbrand erforderliche Temperatur von typischerweise über 550 °C erforderlich. Da bei den üblichen Fahrzuständen eine solch hohe Temperatur selten erreicht wird, ist für eine Regeneration des Partikelfilters 6 eine erzwungene Aufheizung des in den Partikelfilter 6 einströmenden Abgases erforderlich. Hierfür wird hauptsächlich das Katalysatorbauteil 1 verwendet. Um Abgas am Katalysatorbauteil 1 und damit den nachfolgenden Partikelfilter 6 zur Durchführung der Regeneration aufzuheizen, wird die erste Reduktionsmittel-Zugabeeinheit 9 aktiviert. Bei aktiver Reduktionsmittel-Zugabeeinheit 9 wird bevorzugt temperaturgeregelt beispielsweise Dieselkraftstoff dem Abgas zugeführt. Der zugeführte Dieselkraftstoff oxidiert hauptsächlich am Katalysatorbauteil 1, wobei eine entsprechende Wärmemenge freigesetzt und somit das Abgas aufgeheizt wird.

Infolge der weiter oben näher erläuterten erfindungsgemäßen Ausführung des Katalysatorbauteils 1 ist die für eine Oxidation des Dieselkraftstoffs erforderliche katalytische Aktivität bereits bei niedrigen Temperaturen von etwa 250°C vorhanden. Die in der ersten Beschichtungszone vorhandene erste Beschichtung ermöglicht ein frühzeitiges "Anspringen" der Oxidation von Dieselkraftstoff, wodurch ausgehend von etwa 250 °C im Bereich der ersten Beschichtungszone dort rasch Temperaturen von über 400 °C erreicht werden. Dies ermöglicht es auch der sich in der anschließenden zweiten Beschichtungszone vorhandenen, weniger stark edelmetallhaltigen zweiten Beschichtung eine oxidationskatalytische Wirkung zu entfalten. Dadurch steigen in dieser Zone die Temperaturen weiter, typischerweise auf etwa 500°C an. Damit ist es wiederum der in der dritten Beschichtungszone vorhandenen, nur gering edelmetallhaltigen dritten Beschichtung ermöglicht, eine oxidationskatalytische Wirkung zu entfalten, wodurch eine weitere Temperatursteigerung auf typischerweise 550 °C oder mehr erzielt wird. Die aufgrund der gezonten Beschichtung des Katalysatorbauteils 1 in diesem ablaufende gestufte Abgasaufheizung ermöglicht daher eine zuverlässige Partikelfilterregeneration auch bei Fahrbedingungen im Niedriglastbereich.

## Patentansprüche

1. Katalysatorbauteil (1) einer Kraftfahrzeug-Abgasreinigungsanlage (4), umfassend einen Trägerkörper in Wabenkörperbauweise, mit sich in einer Längsrichtung erstreckenden, von Gas von einem einlassseitigen Ende (2) des Katalysatorbauteils (1) bis zu einem auslassseitigen Ende (3) des Katalysatorbauteils (1) frei durchströmbaren Kanälen mit Kanalwänden, auf denen durchgehend eine katalytisch wirksame Beschichtung mit einem durch wenigstens ein Element der Platingruppe bestimmten Edelmetallgehalt (PGM) aufgebracht ist, wobei
- eine erste Beschichtungszone vorgesehen ist, die sich in Längsrichtung im Wesentlichen vom einlassseitigen Ende (2) bis zu einer im Bereich zwischen dem einlassseitigen Ende (2) und dem auslassseitigen Ende (3) angeordneten ersten Beschichtungsgrenze (G1) erstreckt und einen ersten Edelmetallgehalt aufweist,
- eine zweite Beschichtungszone vorgesehen ist, die sich in Längsrichtung im Wesentlichen von der ersten Beschichtungsgrenze (G1) bis zu einer im Bereich zwischen dem einlassseitigen Ende (2) und dem auslassseitigen Ende (3) und hinter der ersten Beschichtungsgrenze (G1) angeordneten zweiten Beschichtungsgrenze (G2) erstreckt und einen gegenüber dem ersten Edelmetallgehalt verminderten zweiten Edelmetallgehalt aufweist,
- eine dritte Beschichtungszone vorgesehen ist, die sich in Längsrichtung im Wesentlichen von der zweiten Beschichtungsgrenze (G2) bis zum auslassseitigen Ende (3) erstreckt und einen gegenüber dem zweiten Edelmetallgehalt verminderten dritten Edelmetallgehalt aufweist,
**dadurch gekennzeichnet, dass**
die Beschichtung durchgehend
- als oxidationskatalytisch wirksame Beschichtung ausgebildet ist und
- frei von Rhodium ist.

2. Katalysatorbauteil nach Anspruch 1,
**dadurch gekennzeichnet, dass**
die Längserstreckungen der ersten und der zweiten Beschichtungszone jeweils 10 % bis 40 % der Gesamtlängserstreckung (L) des Katalysatorbauteils (1) betragen.

3. Katalysatorbauteil nach Anspruch 1 oder 2,
**dadurch gekennzeichnet, dass**
der Edelmetallgehalt (PGM) der Beschichtung durch die Elemente Platin und Palladium bestimmt ist, wobei der Edelmetallgehalt etwa 0.071 g/l bis 3.53 g/l (12 g/ft³ bis etwa 100 g/ft³) bezogen auf das Gesamtvolumen des Katalysatorbauteils (1) beträgt.

4. Katalysatorbauteil nach Anspruch 3,
**dadurch gekennzeichnet, dass**
die Edelmetalle Platin und Palladium in einem Massenverhältnis von 1:5 bis 5:1 in der Beschichtung vorgesehen sind.

5. Katalysatorbauteil nach einem der Ansprüche 1 bis 4,
**dadurch gekennzeichnet, dass**
der Edelmetallgehalt in der ersten Beschichtungszone 2.12 g/l bis 5.3 g/l (60 g/ft³ bis 150 g/ft³), in der zweiten Beschichtungszöne 0.71 g/l bis 2.12 g/l (20 g/ft³ bis 60 g/ft³) und in der dritten Beschichtungszone
0.18g/l bis 0.53 g/l (5 g/ft³ bis 15 g/ft³) beträgt.

6. Verwendung eines Katalysatorbauteils (1) nach einem der Ansprüche 1 bis 5 in einer Abgasreinigungsanlage (4) eines Kraftfahrzeugs zur Aufheizung von Abgas durch Oxidation von Kohlenwasserstoffen stromauf einer in der Abgasreinigungsanlage (4) angeordneten seriellen Anordnung eines Partikelfilters (6) und eines dem Partikelfilter (6) nachgeschalteten SCR-Katalysators (7, 8).

7. Verwendung des Katalysatorbauteils nach Anspruch 6,
**dadurch gekennzeichnet, dass**
zumindest überwiegend als Dieselkraftstoff vorliegende Kohlenwasserstoffe oxidiert werden.

8. Verwendung des Katalysatorbauteils nach Anspruch 6 oder 7,
**dadurch gekennzeichnet, dass**
stromab des Partikelfilters (6) ein zweiteiliger SCR-Katalysator (7, 8) in der Abgasreinigungsanlage (4) vorgesehen ist, der in Abgasströmungsrichtung (11) gesehen einen ersten Teil (7), mit einem Eisen enthaltenden Zeolithen und einen stromab davon angeordneten zweiten Teil (8) mit einem Kupfer enthaltenden Zeolithen aufweist.

## Claims

1. Catalyst component (1) of a motor vehicle exhaust gas purification system (4), comprising a support body in honeycomb construction with passages which extend in a longitudinal direction, through which gas can flow freely from an inlet-side end (2) of the catalyst component (1) to an outlet-side end (3) of the catalyst component (1) and which are provided with passage walls to which is applied a continuous catalytically active coating with a precious metal content (PGM) determined by at least one element of the platinum group, wherein
- a first coating zone is provided, which extends in the longitudinal direction substantially from the inlet-side end (2) to a first coating boundary (G1) located in the region between the inlet-side end (2) and the outlet-side end (3) and has a first precious metal content,
- a second coating zone is provided, which extends in the longitudinal direction substantially from the first coating boundary (G1) to a second coating boundary (G2) located in the region between the inlet-side end (2) and the outlet-side end (3) and downstream of the first coating boundary (G1) and has a second precious metal content which is lower than the first precious metal content,
- a third coating zone is provided, which extends in the longitudinal direction substantially from the second coating boundary (G2) to the outlet-side end (3) and has a third precious metal content which is lower than the second precious metal content,
**characterised in that**
the coating is represented throughout
- as an oxidising catalytically acting coating and
- is free of rhodium.

2. Catalyst component according to claim 1,
**characterised in that**
the longitudinal dimensions of the first and second coating zones each amount to 10% to 40% of the total longitudinal dimension (L) of the catalyst component (1).

3. Catalyst component according to claim 1 or 2,
**characterised in that**
the precious metal content (PGM) of the coating is determined by the elements platinum and palladium, the precious metal content being approximately 0.071 g/l to 3.53 g/l, with reference to the total volume of the catalyst component (1).

4. Catalyst component according to claim 3,
**characterised in that**
the precious metals platinum and palladium are provided in the coating in a mass ratio of 1:5 to 5:1.

5. Catalyst component according to any of claims 1 to 4,
**characterised in that**
the precious metal content is 2.12 g/l to 5.3 g/l in the first coating zone, 0.71 g/l to 2.12 g/l in the second coating zone and 0.18 g/l to 0.53 g/l in the third coating zone.

6. Use of a catalyst component (1) according to any of claims 1 to 5 in an exhaust gas purification system (4) of a motor vehicle for heating exhaust gas by oxidising hydrocarbons upstream of a serial arrangement of a particulate filter (6) located in the exhaust gas purification system (4) and an SCR catalytic converter (7, 8) located downstream of the particulate filter (6).

7. Use of the catalyst component according to claim 6,
**characterised in that**
hydrocarbons which are at least predominantly present as diesel fuel are oxidised.

8. Use of the catalyst component according to claim 6 or 7,
**characterised in that**
downstream of the particulate filter (6), a two-part SCR catalytic converter (7, 8) is provided which comprises, as viewed in the direction of exhaust gas flow (11), a first part (7) with a zeolite containing iron and a second part (8) with a zeolite containing copper located downstream.

## Revendications

1. Composant (1) de catalyseur d'une installation d'épuration des gaz d'échappement (4) de véhicule automobile comprenant un corps de support de structure alvéolaire, comportant des canaux s'étendant dans la direction longitudinale pouvant être parcourus librement par un gaz à partir d'une extrémité côté admission (2) du composant (1) de catalyseur jusqu'à l'extrémité (3) côté sortie du composant (1) de catalyseur comprenant des parois de canal sur lesquelles un revêtement catalytique ayant une teneur en métaux précieux (PGM) déterminé par au moins un élément du groupe est appliqué en continu,
- une première zone de revêtement prévue s'étend dans la direction longitudinale essentiellement à partir de l'extrémité (2) côté admission jusqu'à une première limite (G1) de revêtement disposée dans une zone entre l'extrémité (2) côté admission et l'extrémité (3) côté sortie et présente une première teneur en métaux précieux,
- une deuxième zone de revêtement prévue s'étend dans la direction longitudinale essentiellement à partir de la première zone de revêtement (G1) jusqu'à une seconde limite de revêtement (G2) disposée dans la zone de l'extrémité (2) côté admission et l'extrémité (3) côté sortie et derrière la première limite de revêtement (G1) et présente une deuxième teneur en métaux précieux réduite par rapport à la première teneur en métaux précieux,
- une troisième zone de revêtement prévue qui s'étend dans la direction longitudinale essentiellement à partir de la deuxième zone de revêtement (G2) jusqu'à l'extrémité (3) côté sortie et présente une troisième teneur en métaux précieux réduite par rapport à la deuxième teneur en métaux précieux,
**caractérisé en ce que** le revêtement étant en continu
- conçu comme un revêtement à activité catalytique d'oxydation et
- exempt de rhodium.

2. Composant de catalyseur selon la revendication 1, **caractérisé en ce que** les allongements longitudinaux de la première et la deuxième zone de revêtement équivalent respectivement entre 10 % et 40 % à l'allongement longitudinal (L) du composant (1) de catalyseur.

3. Composant de catalyseur selon la revendication 1 ou la revendication 2, **caractérisé en ce que** la teneur en métaux précieux (PGM) du revêtement est déterminée par les éléments platine et palladium, la teneur en métaux précieux s'élevant à environ entre 0,07g/l et 3,53 g/l rapport au volume total du composant (1) de catalyseur.

4. Composant de catalyseur selon la revendication 3, **caractérisé en ce que** les métaux précieux platine et palladium sont prévus dans un rapport de masse compris entre 1:5 et 5:1 dans le revêtement.

5. Composant de catalyseur selon l'une quelconque des revendications 1 à 4, **caractérisé en ce que** la teneur en métaux précieux dans la première zone de revêtement comprise entre 2,12 g/l et 5,3 g/l, dans la deuxième zone de revêtement entre 0,71 g/l et 2,12 g/l et dans la troisième zone de revêtement entre 0,18g/l et 0,53 g/l.

6. Utilisation d'un composant (1) de catalyseur selon l'une quelconque des revendications 1 à 5, dans une installation (4) d'épuration de gaz d'échappement d'un véhicule automobile destiné à chauffer le gaz d'échappement par oxydation des hydrocarbures en amont d'un système disposé en série dans l'installation (4) d'épuration de gaz d'échappement d'un filtre à particules (6) et d'un catalyseur (7, 8) à réduction catalytique sélective disposé en aval du filtre à particules (6).

7. Utilisation du composant de catalyseur selon la revendication 6, **caractérisé en ce qu'**au moins les hydrocarbures existants sont oxydés en quantité plus importante que le carburant diesel.

8. Utilisation du composant de catalyseur selon la revendication 6 ou 7, **caractérisé en ce qu'**en aval du filtre à particules (6) un catalyseur (7, 8) à réduction catalytique sélection en deux parties est prévu dans l'installation d'épuration de gaz d'échappement (4), qui présente dans la direction d'écoulement de gaz d'échappement (11) une première partie (7), comprenant une zéolithe contenant du fer et une seconde partie (8) disposée en aval de la première partie contenant une zéolithe contenant du cuivre.
